# EUROPÄISCHE PATENTSCHRIFT

(11) **EP 1 660 346 B1**
(45) Veröffentlichungstag und Bekanntmachung des Hinweises auf die Patenterteilung: **15.11.2006**
(21) Anmeldenummer: 04764501.5
(22) Anmeldetag: 26.08.2004
(51) Int. Cl.: B60N 2/44, B60N 2/16

(54) **DREHANTRIEB FÜR EINEN EINSTELLER EINES FAHRZEUGSITZES**
ROTARY ACTUATOR FOR AN ADJUSTER OF A VEHICLE SEAT
MECANISME D'ENTRAINEMENT EN ROTATION POUR DISPOSITIF DE REGLAGE DE SIEGE DE VEHICULE

(30) Priorität: 05.09.2003 DE 10340997
(43) Veröffentlichungstag der Anmeldung: 31.05.2006
(73) Patentinhaber: KEIPER GmbH & Co. KG, 67657 Kaiserslautern (DE)
(72) Erfinder: STEMMER, Jürgen, 42897 Remscheid (DE); EWALD, Tobias, 45257 Essen (DE); SCHÜLER, Rolf, 42579 Heiligenhaus (DE); MESSERSCHMIDT, Reiner, 40211 Düsseldorf (DE)
(74) Vertreter: Patentanwälte Hosenthien-Held und Dr. Held
(86) Internationale Anmeldenummer: PCT/EP2004/009525
(87) Internationale Veröffentlichungsnummer: WO 2005/023582

(56) Entgegenhaltungen:
- DE-C- 10 057 377
- FR-A- 2 560 832

## Beschreibung

Die Erfindung betrifft einen Drehantrieb für einen Einsteller eines Fahrzeugsitzes, insbesondere eines Kraftfahrzeugsitzes, mit den Merkmalen des Oberbegriffs des Anspruches 1.

Bei einem aus der DE 100 57 377 C1 bekannten Drehantrieb dieser Art mit aneinander abwälzenden Hebeln ist ein Getriebe vorgesehen, welches bei einem Anstieg des antreibenden Drehmoments, beispielsweise aufgrund einer erhöhten Gegenkraft des anzutreibenden Einstellers, zur Vermeidung einer Überlast eine kontinuierliche Reduktion des Übersetzungsverhältnisses vorsieht. Wenn der Einsteller, den der Drehantrieb antreiben soll, mit spielfreistellenden Elementen, beispielsweise Federn, versehen ist, muß vor der eigentlichen Einstellbewegung der von den spielfreistellenden Mitteln zurückgelegte Weg entgegen deren Kraft durchfahren werden. Wenn kein großer Betätigungsweg für das Bedienelement zur Verfügung steht, kann diese anfänglich subjektiv als gering empfundene Effizienz des Drehantriebs vom Benutzer als unkomfortabel angesehen werden.

Der Erfindung liegt die Aufgabe zu Grunde, einen Drehantrieb der eingangs genannten Art zu verbessern. Diese Aufgabe wird erfindungsgemäß durch einen Drehantrieb mit den Merkmalen des Anspruches 1 gelöst. Vorteilhafte Ausgestaltungen sind Gegenstand der Unteransprüche.

Dadurch, daß das Übersetzungsgetriebe während der Betätigung durch das Bedienelement zwei Phasen durchläuft, während denen die Übersetzungsverhältnisse jeweils konstant sind, kann in der ersten Phase, d.h. während der anfänglichen Bewegung des Bedienelementes aus der Ruhestellung heraus, mit der größeren Übersetzung rasch und ohne großen Bedienweg der Leerweg oder der als solcher empfundene Weg durchfahren werden, wie er durch Toleranzen, Spiel und spielfreistellende Elemente bedingt auftritt, so daß vorzugsweise der Einsteller intern spielfrei wird. In der zweiten Phase, d.h. während der weiteren Bewegung des Bedienelementes in eine ausgelenkte Stellung, kann dann mit der kleineren Übersetzung, für die ein größerer Anteil des Bedienweges zur Verfügung steht, die volle Antriebskraft übertragen werden, um vorzugsweise die eigentliche Einstellbewegung zu bewirken. Der subjektive Eindruck eines großen Betätigungsweges mit geringer Effizienz wird deutlich reduziert. Der Betätigungsweg für die Einstellbewegung ist nicht auf einen kleinen Winkelbereich beschränkt. Vorzugsweise weist das Übersetzungsgetriebe Bauteile auf, die während der ersten Phase eine Bewegung relativ zueinander ausführen, um das größere Übersetzungsverhältnis zu verwirklichen, und während der zweiten Phase gemeinsam um eine Hauptachse schwenken, um die Antriebskraft zu übertragen.

In einer bevorzugten Ausbildung weist das Übersetzungsgetriebe als eines dieser Bauteile eine Trägerplatte oder einen anderen Träger auf, welche während der ersten Phase in einer definierten Ruhelage bleibt, vorzugsweise durch die Vorspannung einer Drehmomentendefinitionsfeder gehalten, wobei die zweite Phase beginnt, wenn die Antriebskraft die Vorspannung der Drehmomentendefinitionsfeder überwindet. Als weiteres Bauteil weist das Übersetzungsgetriebe vorzugsweise ein Zahnsegment oder ein anderes kuppelbares Element auf, welches vorzugsweise relativ zur Trägerplatte radial verschieblich und schwenkbar ist, beispielsweise durch eine Langloch-Bolzen-Feder-Kombination.

Wenn das Zahnsegment vom Bedienelement beaufschlagt wird, kann es während der ersten Phase mit der Radialverschiebung beim Abtriebselement einkuppeln und mit der Schwenkbewegung dieses antreiben. Zum Einkuppeln kann ein am Abtriebselement angeformter Zahnkranz oder ein drehfest verbundenes Zahnrad oder ein vergleichbares Bauteil vorgesehen sein, welches mit dem Zahnsegment zusammenwirken kann. Durch unterschiedliche Krümmungsradien wird das größere Übersetzungsverhältnis geschaffen. Die Schwenkbewegung des Zahnsegmentes während der ersten Phase erfolgt vorzugsweise um einen auf der Trägerplatte angeordneten, festen Schwenkpunkt, beispielsweise einen Bolzen, der zugleich der Führung für die Radialverschiebung dienen kann. Wenn in der zweiten Phase dann die Trägerplatte um die Hauptachse zu schwenken beginnt, ergibt sich automatisch eine gemeinsame Schwenkbewegung aller Bauteile des Übersetzungsgetriebes um die Hauptachse.

Der erfindungsgemäße Drehantrieb, der als Schnittstelle zwischen dem Benutzer und dem Einsteller dient, kann in Abhängigkeit des Anwendungsfalles unterschiedlich ausgestaltet werden, beispielsweise rein rotatorisch kontinuierlich mit beispielsweise einem Handrad oder diskontinuierlich als Schrittschaltwerk.

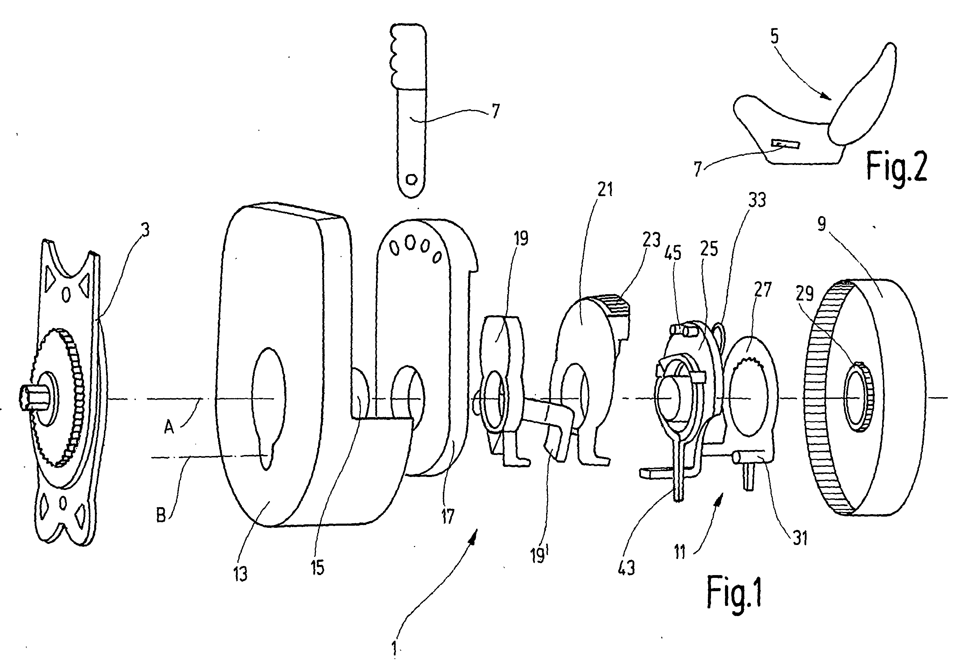

Im folgenden ist die Erfindung anhand eines in der Zeichnung dargestellten Ausführungsbeispiels näher erläutert. Es zeigen
- Fig. 1: eine teilweise schematisierte Explosionsansicht des Ausführungsbeispiels,
- Fig. 2: eine schematisierte Ansicht eines Fahrzeugsitzes,
- Fig. 3: eine teilweise geschnitten dargestellte Ansicht eines Übersetzungsgetriebes in der Ruhestellung,
- Fig. 4: eine Fig. 3 entsprechende Ansicht des Übersetzungsgetriebes beim Einkuppeln zu Beginn einer ersten Phase,

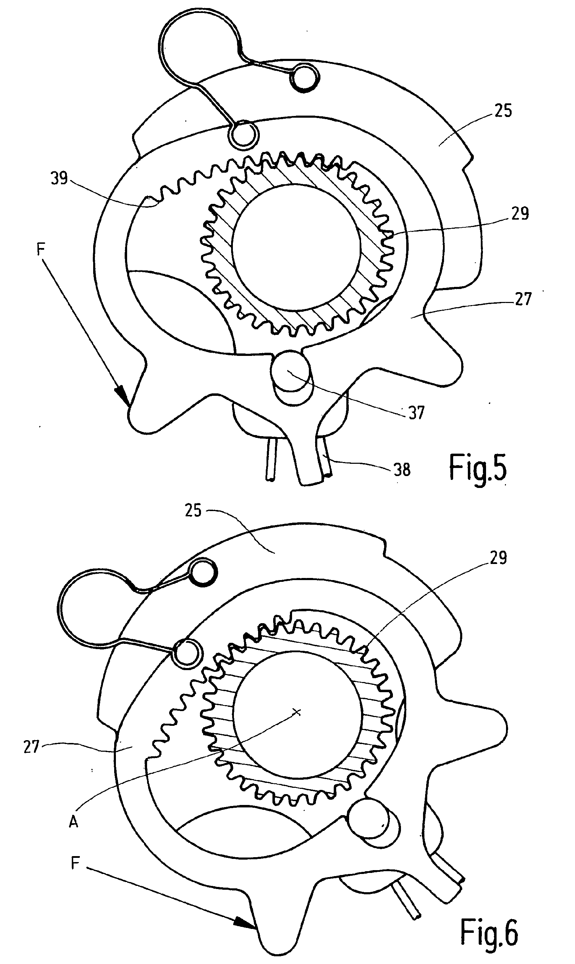

- Fig. 5: eine Fig. 4 entsprechende Ansicht des Übersetzungsgetriebes am Ende der ersten Phase, und
- Fig. 6: eine Fig. 5 entsprechende Ansicht des Übersetzungsgetriebes während einer zweiten Phase.

Ein manueller Drehantrieb 1 für einen Einsteller 3 eines Fahrzeugsitzes 5 in einem Kraftfahrzeug weist ein manuell betätigbares Bedienelement 7, vorliegend einen Handhebel, und ein durch das Bedienelement 7 mittelbar drehbares, als Rad ausgebildetes Abtriebselement 9 auf, welches mit der Drehbewegung den Einsteller 3 antreibt. Im Drehantrieb 1, der im Ausführungsbeispiel als Schrittschaltwerk ausgebildet ist und auf einen Höheneinsteller wirkt, ist in Wirkungsrichtung zwischen dem Bedienelement 7 und dem Abtriebselement 9 ein Übersetzungsgetriebe 11 angeordnet, welches erfindungsgemäß bei einer anfänglichen Bewegung des Bedienelementes 7 aus der Ruhestellung heraus, im folgenden auch als erste Phase bezeichnet, eine große Übersetzung zur Verfügung stellt, wobei während der ersten Phase das Spiel im Einsteller 3 eliminiert wird. Bei der weiteren Bewegung des Bedienelementes 7, im folgenden als zweite Phase bezeichnet, sorgt das Übersetzungsgetriebe 11 für eine direkte Übersetzung 1:1, wobei während der zweiten Phase der Einsteller 3 abtriebsseitig bewegt wird.

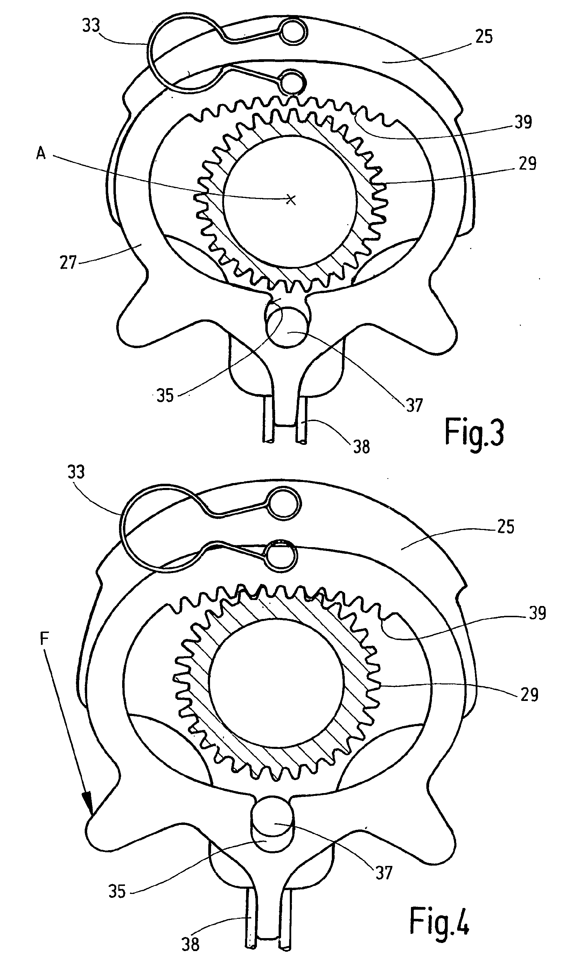

Im einzelnen ist der Drehantrieb 1 mit einem Gehäuse 13 versehen, der einen eine Hauptachse A definierenden Zagerzapfen 15 aufweist und ein mit dem Bedienelement 7 verbundenes Außenevolventenelement 17 lagert, welches um eine zur Hauptachse A parallele Nebenachse B schwenkbar ist und den Lagerzapfen 15 weiträumig umschließt. Auf dem Lagerzapfen 15 sind nacheinander ein vom Außenevolventenelement 17 bewegtes Innenevolventenelement 19, ein Schubelemententräger 21, welcher ein Schubelement 23 führt, eine Trägerplatte 25 und das mit dem Einsteller 3 in drehfester Verbindung stehende Abtriebselement 9 gelagert. Zwischen der Trägerplatte 25 und dem Abtriebselement 9 ist ein Zahnsegment 27 angeordnet. Die Trägerplatte 25, das Zahnsegment 27 und ein am Abtriebselement 9 angeformter Zahnkranz 29 definieren das Übersetzungsgetriebe 11. Fig. 3 zeigt die Ruhestellung des Übersetzungsgetriebes 11.

Bei einer Schwenkbewegung des Bedienelementes 7 aus der Ruhestellung heraus schwenkt das Außenevolventenelement 17, welches mit einer Abwälzbewegung das Innenevolventenelement 19 schwenkt. Das Innenevolventenelement 19 beaufschlagt - je nach Schwenkrichtung - mittels eines von zwei Armen 19' mit einer Antriebskraft F einen von zwei Zapfen 31 des Zahnsegmentes 27. In der ersten Phase wird das Zahnsegment 27 entgegen der Kraft einer ersten Rückstellfeder 33 radial verschoben, wobei es durch einen in ein Langloch 35 des Zahnsegmentes 27 greifenden Lagerbolzen 37 der in Ruhe bleibenden Trägerplatte 25 und durch eine Führungsfeder 38 geführt wird. Eine Verzahnung 39 des Zahnsegmentes 27 gelangt in Eingriff mit dem Zahnkranz 29 des Abtriebselementes 9, d.h. das Zahnsegment 27 kuppelt ein. Mit der weiteren Bewegung des Zahnsegmentes 27, welche entgegen der Kraft einer zugleich als zweite Rückstellfeder dienenden Führungsfeder 38 erfolgt, schwenkt das Zahnsegment 27 um den als Schwenkstelle dienenden Lagerbolzen 37, welcher versetzt zur Hauptachse A angeordnet ist. Dabei wälzt sich die Verzahnung 39 am Zahnkranz 29 ab, wodurch sich das Abtriebselement 9 dreht. Ein durch internes Spiel im Einsteller 3 bedingter Leerweg wird durchfahren, bis der Einsteller 3 intern spielfrei ist. Der Krümmungsradius der Verzahnung 39, d.h. ihres Fußkreises, ist im vorliegenden Ausführungsbeispiel viermal so groß wie der Krümmungsradius des Zahnkranzes 29, so daß ein Übersetzungsverhältnis von 4:1 vorliegt. Der Leerweg des Einstellers 3 wird dadurch bereits mit einem kleinen Schwenkwinkel vollständig durchfahren.

Die zweite Phase beginnt, wenn - ausgelöst durch die vom Einsteller 3 nach Durchfahren des Leerwegs aufgebaute Gegenkraft - die Antriebskraft F die Vorspannung einer als dritte Rückstellfeder wirkenden Drehmomentendefinitionsfeder 43 übersteigt, welche am Gehäuse 13 abgestützt ist und die Trägerplatte 25 während der ersten Phase in Ruhe hält. Die Trägerplatte 25 dreht sich dann mit um die Hauptachse A, wobei durch einen von zwei axial abstehenden, angeformten Stiften 45 der Trägerplatte 25 das Schubelement 23 radial nach außen gedrückt wird, bis es in eine Innenverzahnung des Abtriebrades 9 greift. Nun erfolgt bei hohem Drehmomentenübertrag mittels des Abtriebrades 9 der Antrieb des Einstellers 3, d.h. es findet die Einstellbewegung des Einstellers 3 statt. Läßt die Kraft auf das Bedienelement 7 in einer ausgelenkten Stellung nach oder kehrt sie sich um, beispielsweise nach dem der Endanschlag erreicht ist und das Bedienelement 7 zurückgeführt ist, sorgen die verschiedenen Rückstellfedern 33, 38 und 43 dafür, daß die Bauteile - bis auf das Abtriebselement 9 - wieder ihre Ausgangsposition einnehmen, die sie in der Ruhestellung bereits eingenommen hatten. Insbesondere sorgt die Rückstellfeder 33 dafür, daß das Zahnsegment 27 mit dem Zahnkranz 29 wieder außer Eingriff gelangt, so daß das Abtriebselement 9 keine Rückstellbewegung erfährt.

### Bezugszeichenliste

- 1: Drehantrieb
- 3: Einsteller
- 5: Fahrzeugsitz
- 7: Bedienelement
- 9: Abtriebselement
- 11: Übersetzungsgetriebe
- 13: Gehäuse
- 15: Lagerzapfen
- 17: Außenevolventenelement
- 19: Innenevolventenelement
- 19': Arm
- 21: Schubelemententräger
- 23: Schubelement
- 25: Trägerplatte
- 27: Zahnsegment
- 29: Zahnkranz
- 31: Zapfen
- 33: Rückstellfeder
- 35: Langloch
- 37: Lagerbolzen
- 38: Führungsfeder
- 39: Verzahnung
- 43: Drehmomentendefinitionsfeder
- 45: Stift
- A: Hauptachse
- B: Nebenachse
- F: Antriebskraft

## Patentansprüche

1. Drehantrieb für einen Einsteller eines Fahrzeugsitzes, insbesondere eines Kraftfahrzeugsitzes, mit einem manuell betätigbaren Bedienelement (7), einem Übersetzungsgetriebe (11), auf welches das Bedienelement (7) bei Betätigung einwirkt, und einem vom Übersetzungsgetriebe (11) wenigstens zeitweise gedrehtes Abtriebselement (9), welches bei einer Drehung den Einsteller (3) antreibt, wobei das Übersetzungsgetriebe (11) während der Betätigung durch das Bedienelement (7) von einem größeren Übersetzungsverhältnis zu einem kleineren Übersetzungsverhältnis wechselt, **dadurch gekennzeichnet, daß** das Übersetzungsgetriebe (11) während der Betätigung durch das Bedienelement (7) zwei Phasen durchläuft, während derer die Übersetzungsverhältnisse jeweils konstant sind.

2. Drehantrieb nach Anspruch 1, **dadurch gekennzeichnet, daß** das Übersetzungsgetriebe (11) Bauteile (25, 27, 29) aufweist, die während der ersten Phase eine Bewegung relativ zueinander ausführen und während der zweiten Phase gemeinsam um eine Hauptachse (A) schwenken.

3. Drehantrieb nach Anspruch 2, **dadurch gekennzeichnet, daß** das Übersetzungsgetriebe (11) als eines dieser Bauteile (25, 27, 29) eine Trägerplatte (25) aufweist, welche während der ersten Phase in Ruhe bleibt.

4. Drehantrieb nach Anspruch 2 oder 3, **dadurch gekennzeichnet, daß** das Übersetzungsgetriebe (11) als eines dieser Bauteile (25, 27, 29) ein Zahnsegment (27) aufweist, welches während der ersten Phase - vom Bedienelement (7) beaufschlagt - beim Abtriebselement (9) einkuppelt und dieses antreibt.

5. Drehantrieb nach Anspruch 3 und 4, **dadurch gekennzeichnet, daß** das Zahnsegment (27) zum Einkuppeln eine Radialverschiebung relativ zur Trägerplatte (25) und zum Antrieb des Abtriebselementes (9) eine Schwenkbewegung um einen zur Hauptachse (A) versetzten Lagerbolzen (37) durchführt.

6. Drehantrieb nach Anspruch 5, **dadurch gekennzeichnet, daß** der Lagerbolzen (37) in ein Langloch (35) greift, um das Zahnsegment (27) für die Radialverschiebung zu führen.

7. Drehantrieb nach einem der Ansprüche 4 bis 6, **dadurch gekennzeichnet, daß** das Übersetzungsgetriebe (11) als eines dieser Bauteile (25, 27, 29) einen mit dem Abtriebselement (9) verbundenen Zahnkranz (29) aufweist, in den das Zahnsegment (27) mit einer Verzahnung (39) beim Einkuppeln eingreift, wobei die Verzahnung (39) einen größeren Krümmungsradius als der Zahnkranz (29) aufweist.

8. Drehantrieb nach einem der Ansprüche 3 bis 7, **dadurch gekennzeichnet, daß** eine Drehmomentendefinitionsfeder (43) durch ihre Vorspannung die Trägerplatte (25) während der ersten Phase in Ruhe hält, und daß die zweite Phase beginnt, wenn die Antriebskraft die Vorspannung der Drehmomentendefinitionsfeder (43) überwindet.

9. Drehantrieb nach einem der Ansprüche 1 bis 8, **dadurch gekennzeichnet, daß** der Drehantrieb (1) während der ersten Phase das Spiel im Einsteller (3) beseitigt und während der zweiten Phase den Einsteller (3) für die Einstellbewegung antreibt.

10. Fahrzeugsitz mit einem Einsteller (3), **gekennzeichnet durch** einen Drehantrieb (1) nach einem der Ansprüche 1 bis 9 zum Antrieb des Einstellers (3).

## Claims

1. A rotary actuator for an adjuster of a vehicle seat, in particular of a motor vehicle seat, having a manually actuable operating element (7), a transmission gearing (11) on which the operating element (7) acts when actuated, and an output element (9) which is rotated at least intermittently by the transmission gearing (11) and, during a rotation, drives the adjuster (3), the transmission gearing (11) changing during the actuation by the operating element (7) from a higher transmission ratio to a lower transmission ratio, **characterized in that** during the actuation by the operating element (7) the transmission gearing (11) runs through two phases during which the transmission ratios are constant in each case.

2. The rotary actuator as claimed in claim 1, **characterized in that** the transmission gearing (11) has components (25, 27, 29) which, during the first phase, execute a movement relative to one another and, during the second phase, together pivot about a main axis (A).

3. The rotary actuator as claimed in claim 2, **characterized in that** the transmission gearing (11) has, as one of these components (25, 27, 29), a support plate (25) which remains inoperative during the first phase.

4. The rotary actuator as claimed in claim 2 or 3, **characterized in that** the transmission gearing (11) has, as one of these components (25, 27, 29), a toothed segment which, during the first phase - acted upon by the operating element (7) - couples with the output element (9) and drives the latter.

5. The rotary actuator as claimed in claim 3 and 4, **characterized in that** for the coupling the toothed segment (27) carries out a radial displacement relative to the support plate (25) and for driving the output element (9) carries out a pivoting movement about a bearing bolt (37) which is offset with respect to the main axis (A).

6. The rotary actuator as claimed in claim 5, **characterized in that** the bearing bolt (37) reaches into a slot (35) in order to guide the toothed segment (27) for the radial displacement.

7. The rotary actuator as claimed in one of claims 4 to 6, **characterized in that** the transmission gearing (11) has, as one of these components (25, 27, 29), a toothed ring (29) which is connected to the output element (9) and in which the toothed segment (27) engages by means of a toothing (39) during the coupling, the toothing (39) having a greater radius of curvature than the toothed ring (29).

8. The rotary actuator as claimed in one of claims 3 to 7, **characterized in that** the prestressing of a torque definition spring (43) keeps the support plate (25) inoperative during the first phase, and **in that** the second phase begins when the driving force overcomes the prestressing of the torque definition spring (43).

9. The rotary actuator as claimed in one of claims 1 to 8, **characterized in that** the rotary actuator (1) eliminates the play in the adjuster (3) during the first phase and drives the adjuster (3) for the adjusting movement during the second phase.

10. A vehicle seat having an adjuster (3), **characterized by** a rotary actuator (1) as claimed in one of claims 1 to 9 for driving the adjuster (3).

## Revendications

1. Commande de rotation pour un dispositif de réglage d'un siège de véhicule, en particulier d'un siège de véhicule automobile, comportant un élément de commande (7) manoeuvrable manuellement, un engrenage de transmission (11), sur lequel l'élément de commande (7) agit lors de la manoeuvre, et un élément mené (9) entraîné en rotation au moins temporairement par l'engrenage de transmission (11), lequel commande lors d'une rotation le dispositif de réglage (3), à l'occasion de quoi l'engrenage de transmission (11) pendant la manoeuvre par l'élément de commande (7) change d'un rapport de transmission plus grand à un rapport de transmission plus petit, **caractérisée par le fait que** l'engrenage de transmission (11) pendant la manoeuvre par l'élément de commande (7) parcourt deux phases, pendant lesquelles les rapports de transmission sont à chaque fois constants.

2. Commande de rotation selon la revendication 1, **caractérisée par le fait que** l'engrenage de transmission (11) présente des parties de structure (25, 27, 29), qui, pendant la première phase, effectuent un mouvement l'une par rapport à l'autre et, pendant la deuxième phase, tournent ensemble autour d'un axe principal (A).

3. Commande de rotation selon la revendication 2, **caractérisée par le fait que** l'engrenage de transmission (11) présente en tant que l'une de ces parties de structure (25, 27, 29) une plaque de support (25), laquelle reste au repos pendant la première phase.

4. Commande de rotation selon l'une des revendications 2 ou 3, **caractérisée par le fait que** l'engrenage de transmission (11) présente, en tant que l'une de ces parties de structure (25, 27, 29), un segment denté, lequel, pendant la première phase - percuté par l'élément de commande (7) - s'accouple sur l'élément mené (9) et actionne celui-ci.

5. Commande de rotation selon l'une des revendications 3 et 4, **caractérisée par le fait que** le segment denté (27) effectue pour l'accouplement un déplacement radial par rapport à la plaque de support (25) et pour la commande de l'élément mené (9) un mouvement de pivotement autour d'un boulon de palier (37) décalé par rapport à l'axe principal (A).

6. Commande de rotation selon la revendication 5, **caractérisée par le fait que** le boulon de palier (37) s'engrène dans un trou oblong (35), pour guider le segment denté (27) pour le déplacement radial.

7. Commande de rotation selon l'une des revendications 4 à 6, **caractérisée par le fait que** l'engrenage de transmission (11) présente, en tant que l'un de ces éléments de structure (25, 27, 29), une couronne dentée (29) reliée avec l'élément mené (9), dans laquelle le segment denté s'engrène avec une denture (39) lors de l'accouplement, la denture (39) présentant un rayon de courbure plus grand que la couronne dentée (29).

8. Commande de rotation selon l'une des revendications 3 à 7, **caractérisée par le fait qu'**un ressort (43) de définition du couple de rotation par sa prétension maintient au repos la plaque de support (25) pendant la première phase, et que la deuxième phase commence lorsque la force d'entraînement surmonte la prétension du ressort (43) de définition du couple de rotation.

9. Commande de rotation selon l'une des revendications 1 à 8, **caractérisée par le fait que** la commande de rotation (1) élimine pendant la première phase le jeu dans le dispositif de réglage (3) et pendant la deuxième phase entraîne le dispositif de réglage (3) pour le mouvement de réglage.

10. Siège de véhicule comportant un dispositif de réglage (3), **caractérisé par** une commande de rotation telle que définie à l'une des revendications 1 à 9 pour l'entraînement du dispositif de réglage (3).
